# EUROPÄISCHE PATENTSCHRIFT

(11) **EP 3 507 126 B1**
(45) Veröffentlichungstag und Bekanntmachung des Hinweises auf die Patenterteilung: **26.01.2022**
(21) Anmeldenummer: 17798108.1
(22) Anmeldetag: 23.10.2017
(51) Int. Cl.: B60L 50/51, H02K 16/00, H02K 7/116, H02K 7/14, B60L 3/00, B60L 3/04

(54) **ELEKTRISCHE MASCHINE ZUM ANTREIBEN EINES VORTRIEBSMITTELS**
ELECTRIC MACHINE FOR DRIVING A PROPULSION DEVICE
MACHINE ÉLECTRIQUE POUR ENTRAÎNER D'UN MOYEN DE PROPULSION

(30) Priorität: 28.10.2016 DE 102016221304
(43) Veröffentlichungstag der Anmeldung: 10.07.2019
(73) Patentinhaber: Rolls-Royce Deutschland Ltd & Co KG, 15827 Blankenfelde-Mahlow (DE)
(72) Erfinder: WOLLENBERG, Johannes, 82166 Gräfelfing (DE)
(74) Vertreter: Haseltine Lake Kempner LLP
(86) Internationale Anmeldenummer: PCT/EP2017/076946
(87) Internationale Veröffentlichungsnummer: WO 2018/077773

(56) Entgegenhaltungen:
- WO-A1-2016/009824
- DE-U1-202015 106 564
- US-A1- 2008 006 739
- US-A1- 2014 203 739

## Beschreibung

Die Erfindung betrifft eine insbesondere redundante elektrische Maschine zum Antreiben eines Vortriebsmittels mit erhöhter Ausfallsicherheit.

Bei elektrischen Maschinen können aufgrund nicht festgestellter bzw. nicht feststellbarer Material- oder Fertigungsfehler sowie auch im Falle von betrieblichen Überlastungen wie bspw. durch Spannungs- und/oder Stromspitzen die Isolationen des Statorwicklungssystems der Maschine versagen. Derartige Fehlerfälle können bspw. dann eintreten, wenn im Statorwicklungssystem ein Windungsschluss, ein Wicklungsschluss oder ein Masseschluss auftritt. Ein solches Versagen verursacht im weiteren Schadensverlauf einen Funktionsausfall und im schlimmsten Fall einen Brand der elektrischen Maschine. Eine derartige Entwicklung stellt grundsätzlich eine Risikosituation dar, da es zumindest zu einem Ausfall und ggf. zu einer Beschädigung der Maschine kommt, was je nach Anwendung der Maschine mehr oder weniger schwerwiegende Konsequenzen haben kann. Insbesondere im Falle einer Anwendung der elektrischen Maschine als Teil des Antriebssystems eines elektrisch oder hybrid-elektrisch angetriebenen Luftfahrzeugs kann der Ausfall der elektrischen Maschine fatale Folgen haben. Dementsprechend müssen in der Luftfahrt eingesetzte Komponenten eine ausreichende Ausfallsicherheit aufweisen.

Um die Ausfallwahrscheinlichkeit zu senken bzw. die Ausfallsicherheit zu verbessern, können elektrische Maschinen für die Anwendung in Luftfahrzeugantrieben wie bspw. in EP2896532A1 aus Sicherheitsgründen eine Redundanz in Form zweier galvanisch getrennter, entlang des Umfangs des Stators verteilter Wicklungssysteme aufweisen, wobei für jedes der beiden Wicklungssysteme eine eigene Spannungsquelle vorgesehen ist. Die beiden getrennten Wicklungssysteme arbeiten mit nur einem permanentmagnetbestückten Läufer zusammen. Wird in einem der beiden Wicklungssysteme oder in einer der beiden Spannungsquellen ein Fehler erkannt, bspw. eine Übertemperatur, eine Überspannung oder ein Überstrom, so wird eine Deaktivierung der fehlerhaften Motorwicklung bzw. der fehlerhaften Spannungsquelle über eine Abschaltung der zugehörigen Spannungsquelle ausgelöst, während das zweite Wicklungssystem regulär weiter betrieben werden kann.

Das beschriebene System erlaubt zwar ein Fortführen des Betriebs, es ist jedoch nicht grundsätzlich auszuschließen, dass das fehlerhafte Wicklungssystem im Fehlerfall weiterhin von einem elektrischen Strom durchflossen wird, was zu einer Überhitzung der Maschine führen kann. Eine Quelle eines solchen Stromflusses kann zum Einen die eigentliche, das Statorwicklungssystem regulär versorgende Stromquelle sein. Diese kann und muss konsequenterweise bei Feststellung eines Fehlerfalles unmittelbar abgeschaltet werden. Zusätzlich sind jedoch auch die aufgrund der weiterhin vorhandenen Rotation des Motorläufers bzgl. des fehlerhaften Statorwicklungssystems in dem Wicklungssystem induzierten Ströme zu berücksichtigen, die insbesondere bei permanenterregten elektrischen Maschinen auftreten. Aufgrund der damit zusammenhängenden Brandgefahr muss daher das gefährliche Überhitzen unmittelbar nach Detektion des Fehlers durch eine sichere Unterbrechung dieses den Schadensfortschritt begünstigenden Stromflusses im Wicklungssystem verhindert werden. Diese Problematik wird zwar mit der in WO2016009824 Z offenbarten Technologie adressiert, indem im Fehlerfall in einem Elektromotor der betroffene Motor elektrisch oder mechanisch abgetrennt wird, indem bspw. ein Ausgeben eines Drehmoment-Befehlswertes von 0 an einen Stromversorgungsmotor umgesetzt wird. Jedoch stellt dies nicht für jeden Fall sicher, dass die beschriebene Problematik verhindert wird.

Es ist daher eine Aufgabe der vorliegenden Erfindung, eine elektrische Maschine mit verbesserter Ausfallsicherheit anzugeben.

Diese Aufgabe wird durch die in Anspruch 1 beschriebene elektrische Maschine sowie durch das in Anspruch 6 beschriebene Betriebsverfahren gelöst. Die Unteransprüche beschreiben vorteilhafte Ausgestaltungen.

Erfindungsgemäß weist die Z elektrische Maschine zum Antreiben eines Vortriebsmittels eines Z Luftfahrzeugs ein Statorsystem mit zumindest einem ersten und einem zweiten Statorwicklungssystem, eine Energieversorgung zur Versorgung der Statorwicklungssysteme mit elektrischer Energie bzw. zum Bestromen der Statorwicklungssysteme, ein Läufersystem mit zumindest einem ersten und einem zweiten Teilläufer sowie eine gemeinsame Welle zum Übertragen einer von jedem der Teilläufer zur Verfügung gestellten Antriebsleistung auf das Vortriebsmittel auf. Es sei angemerkt, dass die Maschine auch mehr als die beiden erwähnten zwei Teilläufer bzw. Statorwicklungssysteme aufweist, wobei vorteilhafterweise die Anzahl der Teilläufer derjenigen der Statorwicklungssysteme entspricht. Der erste Teilläufer ist dem ersten und der zweite Teilläufer dem zweiten Statorwicklungssystem zugeordnet. Jeder der Teilläufer ist gegenüber dem ihm zugeordneten Statorwicklungssystem und gegenüber dem jeweils anderen Teilläufer im Wesentlichen momentfrei, d.h. insbesondere abgesehen von Reibungsverlusten, rotierbar. Einander zugeordnete Teilläufer und Statorwicklungssysteme bilden ein jeweiliges erstes bzw. zweites Teilantriebssystem und sind derart ausgebildet und zueinander angeordnet, dass sie elektromagnetisch miteinander wechselwirken können, so dass sie als Elektromotoreinheiten arbeiten. Jeder der Teilläufer ist mit Hilfe eines jeweiligen Freilaufs derart mit der Welle verbunden, dass der jeweilige erste bzw. zweite Teilläufer nur in einer Arbeitsdrehrichtung der Welle ein Drehmoment auf die Welle übertragen kann.

Der erste Teilläufer ist also mit Hilfe eines ersten Freilaufs derart mit der Welle verbunden, dass der erste Teilläufer nur in der Arbeitsdrehrichtung ein Drehmoment auf die Welle übertragen kann, und der zweite Teilläufer ist mit Hilfe eines zweiten Freilaufs derart mit der Welle verbunden, dass der zweite Teilläufer ebenfalls nur in der Arbeitsdrehrichtung ein Drehmoment auf die Welle übertragen kann. Die im Betriebszustand der elektrischen Maschine über die Statorwicklungssysteme in die Teilläufer eingeprägten Drehmomente werden so auf der gemeinsamen Welle in Arbeitsdrehrichtung addiert. In der der Arbeitsdrehrichtung entgegengesetzten Drehrichtung kann aufgrund der Freiläufe keiner der Teilläufer ein Drehmoment auf die gemeinsame Welle übertragen. Darüber hinaus erfindungsgemäß garantiert die Verwendung der Freiläufe, dass seitens der Welle, welche immer in der gleichen Arbeitsdrehrichtung rotiert, kein Drehmoment auf die Teilläufer übertragen werden kann.

Die Maschine weist eine Antriebssteuerung auf, welche eingerichtet ist, um die elektrische Maschine und insbesondere die Teilantriebssysteme hinsichtlich des Vorliegens eines Fehlerfalls zu überwachen. Bei Detektion eines Fehlerfalls in einem der Teilantriebssysteme, welches konsequenterweise als "fehlerhaftes Teilantriebssystem" bezeichnet werden kann, führt die Antriebssteuerung eine galvanische Trennung des Statorwicklungssystems des fehlerhaften Teilantriebssystems von der Energieversorgung herbei. Die Trennung ist erfindungsgemäß durch entsprechende Schalter in den elektrischen Verbindungen zwischen der Energieversorgung und dem jeweiligen Statorwicklungssystem realisiert.

Mit dieser Maßnahme wird erreicht, dass im Fehlerfall seitens der Energieversorgung kein Strom mehr in das betroffene Statorwicklungssystem eingespeist wird, so dass es dort konsequenterweise nicht zu einer Überhitzung kommen kann. Da nur die Energieversorgung der betroffenen, fehlerhaften Statorwicklungssystems unterbrochen wird, kann das intakte Statorwicklungssystem weiter betrieben werden, so dass das Antriebssystem nach wie vor betrieben werden kann, wenn auch mit verringerter Leistung. Ein Fehlerfall kann bspw. darin bestehen, dass in dem betroffenen Wicklungssystem eine Übertemperatur oder ein Isolationsfehler festgestellt wird oder dass die Energieversorgung bzw. eine der separaten Stromquellen ausfällt.

Zur Realisierung des elektromagnetischen Wechselwirkens von einander zugeordneten Teilläufern und Statorwicklungssystemen weist jeder der Teilläufer magnetische Mittel auf, welche derart ausgebildet und am jeweiligen Teilläufer angeordnet sind, ein durch einen in das jeweilige Statorwicklungssystem eingespeisten elektrischen Strom erzeugtes Magnetfeld des Statorwicklungssystems mit den magnetischen Mitteln des zugeordneten Teilläufers bzw. mit deren Magnetfeldern derart wechselwirkt, dass der zugeordnete Teilläufer in Rotation versetzt wird. Die elektrische Maschine arbeitet in diesem Fall also als Elektromotor. Die Rotation des zugeordneten Teilläufers wird auf die Welle übertragen, um letztendlich das Vortriebsmittel in Rotation zu versetzen.

Die Teilläufer sind nach einem Ausführungsbeispiel Z konzentrisch und in axialer Richtung gesehen hintereinander angeordnet.

In analoger Weise sind nach einem weiteren Ausführungsbeispiel die Statorwicklungssysteme in axialer Richtung gesehen hintereinander angeordnet.

Dadurch, dass die Teilläufer bzw. die Statorwicklungssysteme jeweils in axialer Richtung hintereinander angeordnet sind, kann verhindert werden, dass im Fehlerfall im Statorwicklungssystem des fehlerhaften Teilantriebssystems durch den nach wie vor rotierenden Teilläufer des intakten Teilantriebssystems Ströme induziert werden. Wie einleitend erwähnt ist dies bei in Umfangsrichtung hinter- bzw. nebeneinander oder abwechselnd angeordneten Statorwicklungssystemen nicht möglich.

Jeweils eine der Komponenten aus einer Komponentengruppe umfassend eines der Statorwicklungssysteme und den diesem Statorwicklungssystem zugeordneten Teilläufer ist radial innerhalb der anderen Komponente der Komponentengruppe angeordnet ist. Mit anderen Worten sind also in einer ersten beispielhaften Ausführungsvariante die Teilläufer als Innenläufer ausgebildet, wobei jeder der Teilläufer radial innerhalb des jeweils zugeordneten Statorwicklungssystems angeordnet ist. In einer zweiten beispielhaften Ausführungsvariante sind die Teilläufer als Außenläufer ausgebildet, wobei jeder der Teilläufer radial außerhalb des jeweils zugeordneten Statorwicklungssystems angeordnet ist. Beide beispielhaften Ausführungsvarianten erlauben eine in axialer Richtung gesehen verringerte Baugröße der elektrischen Maschine.

In einer vorteilhaften Ausführungsform sind die Statorwicklungssysteme galvanisch voneinander getrennt. Alternativ kann vorgesehen sein, dass die Statorwicklungssysteme im Normalbetrieb elektrische miteinander verbunden sind, dass es aber erfindungsgemäß im Fehlerfall möglich ist, sie galvanisch zu trennen. Auch durch diese Maßnahme der permanenten oder einzurichtenden galvanischen Trennung der Statorwicklungssysteme wird erreicht, dass im Fehlerfall im Statorwicklungssystem des fehlerhaften Teilantriebssystems keine nennenswerten Ströme fließen.

Erfindungsgemäß weist die Energieversorgung für das erste Statorwicklungssystem eine erste, dem ersten Teilantriebssystem zugeordnete Stromquelle und für das zweite Statorwicklungssystem eine zweite, dem zweiten Teilantriebssystem zugeordnete Stromquelle auf. Die Stromquellen sind eingerichtet, um das jeweilige Statorwicklungssystem mit elektrischem Strom zu versorgen.

Die oben erwähnte Überwachung der Teilantriebssysteme hinsichtlich des Vorliegens eines Fehlerfalls bezieht die hier eingeführten Stromquellen erfindungsgemäß mit ein, d.h. auch diese werden hinsichtlich des Vorliegens eines Fehlerfalls überwacht. Die Trennung des Statorwicklungssystems des fehlerhaften Teilantriebsystems von der Energieversorgung bedeutet erfindungsgemäß, dass dieses Statorwicklungssystem von der zugeordneten Stromquelle getrennt wird. Das andere, nicht fehlerhafte Statorwicklungssystem bleibt mit seiner Stromquelle verbunden und kann regulär weiter arbeiten.

Erfindungsgemäß weisen die Teilantriebsysteme jeweils einen Umrichter auf, welcher jeweils elektrisch zwischen die Stromquelle und das Statorwicklungssystem des jeweiligen Teilantriebssystems geschaltet ist und welcher jeweils eingerichtet ist, um eine von der jeweiligen Stromquelle bereitgestellte elektrische Energie in eine zum Betreiben des jeweiligen Statorwicklungssystems geeignete elektrische Spannung zu verarbeiten. In jedem der Teilantriebssysteme ist dabei jeweils eine Schaltergruppe mit jeweils zumindest einem Schalter vorgesehen, wobei zumindest ein Schalter der jeweiligen Schaltergruppe elektrisch zwischen der jeweiligen Stromquelle und dem jeweiligen Umrichter angeordnet ist und/oder zumindest ein Schalter der jeweiligen Schaltergruppe zwischen dem jeweiligen Umrichter und dem jeweiligen Statorwicklungssystem angeordnet ist. Es ist also bspw. in dem ersten Teilantriebssystem eine erste Schaltergruppe vorgesehen. Die erste Schaltergruppe umfasst zumindest einen Schalter. Dieser kann elektrisch zwischen der ersten Stromquelle und dem ersten Umrichter angeordnet sein oder zwischen dem ersten Umrichter und dem ersten Statorwicklungssystem. Die erste Schaltergruppe weist erfindungsgemäß zwei Schalter auf, wobei einer der beiden Schalter elektrisch zwischen der ersten Stromquelle und dem ersten Umrichter und der andere Schalter zwischen dem ersten Umrichter und dem ersten Statorwicklungssystem angeordnet ist. Entsprechendes ist in dem zweiten Teilantriebssystem vorgesehen. Die galvanische Trennung des Statorwicklungssystems des fehlerhaften Teilantriebssystems von der Energieversorgung wird durch Öffnen von zumindest einem der Schalter der Schaltergruppe des fehlerhaften Teilantriebssystems realisiert.

Erfindungsgemäß soll das "Öffnen" eines Schalters bedeuten bzw. bewirken, dass der geöffnete Schalter den Stromfluss unterbricht bzw. die entsprechende elektrische Verbindung trennt.

Die Antriebssteuerung ist eingerichtet, um das Öffnen des jeweiligen Schalters zu veranlassen, wobei die Antriebssteuerung desweiteren derart eingerichtet ist, dass sie in Abhängigkeit von dem Ort des Auftretens des Fehlerfalls im fehlerhaften Teilantriebssystem auswählt, welcher Schalter der jeweiligen Schaltergruppe geöffnet wird.

Im Betrieb einer derartigen erfindungsgemäßen elektrischen Maschine werden die elektrische Maschine und insbesondere die Teilantriebssysteme hinsichtlich des Vorliegens eines Fehlerfalls überwacht. Für den Fall, dass in einem fehlerhaften der Teilantriebssysteme ein Fehlerfall festgestellt wird, wird das Statorwicklungssystem des fehlerhaften Teilantriebssystems galvanisch von der Energieversorgung getrennt, so dass das getrennte Statorwicklungssystem nicht mehr mit dem ihm zugeordneten Teilläufer elektromagnetisch wechselwirkt und dieser Teilläufer somit auch kein Drehmoment mehr auf die Welle ausübt.

Die Teilantriebssysteme weisen Z erfindungsgemäß jeweils eine Stromquelle auf, mit der das Statorwicklungssystem des jeweiligen Antriebssystems mit elektrischem Strom versorgt wird. Im Fehlerfall wird das Statorwicklungssystem des fehlerhaften Teilantriebssystems elektrisch von der Stromquelle des fehlerhaften Teilantriebssystems getrennt, d.h. die elektrische Verbindung zwischen dieser Stromquelle und diesem Statorwicklungssystem wird unterbrochen.

Die Teilantriebssysteme weisen außerdem Z erfindungsgemäß jeweils einen Umrichter auf, welcher jeweils elektrisch zwischen die Stromquelle und das Statorwicklungssystem des jeweiligen Teilantriebssystems geschaltet ist und welcher jeweils eingerichtet ist, um eine von der jeweiligen Stromquelle bereitgestellte elektrische Energie in eine zum Betreiben des jeweiligen Statorwicklungssystems geeignete elektrische Spannung zu verarbeiten. Im Fehlerfall wird im fehlerhaften Teilantriebssystem eine erste elektrische Verbindung zwischen Stromquelle und Umrichter des fehlerhaften Teilantriebssystems oder eine zweite elektrische Verbindung zwischen Umrichter und Statorwicklungssystem des fehlerhaften Teilantriebssystems getrennt.

Dabei wird in Abhängigkeit vom Ort des Auftretens des Fehlerfalls die erste oder aber die zweite elektrische Verbindung im fehlerhaften Teilantriebssystem getrennt.

Das Trennen einer elektrischen Verbindung erfolgt erfindungsgemäß dadurch, dass ein in der Verbindung integrierter Schalter geöffnet wird.

Die der Erfindung zu Grunde liegende Annahme liegt darin, dass im Fehlerfall, also bei einer Übertemperatur oder einem Isolationsfehler, die Bewegung des betroffenen bzw. beteiligten Teilläufers bzw. die Bewegung der an diesem Teilläufer befestigten magnetischen Mittel gegenüber dem fehlerhaften Statorwicklungssystem verhindert werden muss, um einen durch den bspw. permanentmagneterregten Läufer induzierten Stromfluss in dem fehlerhaften Wicklungssystem und den damit einhergehenden, ggf. kritischen (punktuellen) thermischen Energieeintrag an der Fehlerstelle und somit einen eventuellen Brand zu verhindern. Dies wird durch Verteilung der einleitend beschriebenen, redundanten und galvanisch getrennten Wicklungssysteme in Achsrichtung anstatt, wie sonst üblich, in Umfangsrichtung erreicht. Es werden Z beispielsweise also zwei oder auch mehr voneinander unabhängige, in Achsrichtung getrennte und hintereinander angeordnete Wicklungssysteme verwendet.

Gleichzeitig besteht der Läufer Z beispielsweise aus einer entsprechenden Anzahl von in Achsrichtung hintereinander auf einer Welle sitzenden Teilläufern, die unter Verwendung der Freiläufe derart installiert sind, dass sie in einer Rotationsrichtung gegeneinander im Wesentlichen momentenfrei bzw. mit sehr kleinem Drehmoment aufgrund nicht zu vermeidender Reibung im Freilauf verdrehbar sind. Die über die Statorwicklungssysteme in die Teilläufer eingeprägten Drehmomente werden auf der gemeinsamen Motorwelle in Arbeitsdrehrichtung addiert.

Durch die Verwendung der Freiläufe wird erfindungsgemäß erreicht, dass jeder der Elektromotoren mechanisch von der gemeinsamen Welle entkoppelt werden kann, so dass einerseits aufgrund der Freiläufe keiner der Teilläufer in der der Arbeitsdrehrichtung entgegengesetzten Drehrichtung ein Arbeitsdrehmoment auf die gemeinsame Motorwelle übertragen kann. Andererseits kann die stets in gleicher Arbeitsdrehrichtung rotierende Welle aufgrund der Freiläufe kein Drehmoment auf den jeweils entkoppelten Teilläufer aufbringen. Wenn also einer der Teilläufer bspw. aufgrund eines Fehlerfalles und dementsprechende Abschaltung des zugeordneten Statorwicklungssystems nicht mehr durch dieses zugeordnete Statorwicklungssystem angetrieben wird, wird dieser Teilläufer zum Stillstand kommen, da die weiterhin rotierende Welle wegen der Verwendung der Freiläufe kein Drehmoment auf diesen Teilläufer übertragen kann. Konsequenterweise kann bei stillstehendem Teilläufer von diesem kein Strom in das abgeschaltete Statorwicklungssystem induziert werden, womit die einleitend beschriebene Überhitzungs- und Brandgefahr im Wesentlichen ausgeschlossen werden kann. Wird von der Antriebssteuerung in einem der Statorwicklungssysteme ein Fehlerfall detektiert, Z also eine Übertemperatur oder ein Isolationsfehler, oder fällt eine der Spannungsquellen aus, so wird die jeweils beteiligte bzw. betroffene Spannungsquelle galvanisch abgetrennt. Das intakte Teilantriebssystem mit Statorwicklungssystem und zugeordnetem Teilläufer kann allein weiterbetrieben werden, so dass die elektrische Maschine mit entsprechend reduzierter Leistung weiterhin funktionstüchtig bleibt. Über den Freilauf desjenigen Teilläufers, der mit dem fehlerhaften Wicklungssystem zusammenwirkt, wird dessen Rotation mangels Form- bzw. Kraftschlusses mit der Motorwelle verhindert, so dass auch eine Induktion von unerwünschtem Strom im dem fehlerhaften Wicklungssystem unterbunden wird. Nach Deaktivierung einschließlich galvanischer Abtrennung der zugehörigen Stromquelle kann also in das fehlerhafte Wicklungssystem keine Energie mehr eingetragen werden. Es fließt kein Strom mehr über die schadhafte Stelle des Wicklungssystems, der einen weiteren Eintrag thermischer Energie bewirken würde und im weiteren Verlauf somit eine Brandgefahr darstellen könnte.

Die vorgestellte Lösung erlaubt demnach eine effektive Nutzung der Redundanz der elektrischen Maschine mit mehreren, galvanisch voneinander getrennten Statorwicklungssystemen durch Verhinderung des unerwünschten Energieeintrags in ein schadhaftes Wicklungssystem durch Entkopplung des zugehörigen Läuferteils mit Freilauf, was zu einer Reduzierung der Auftretenswahrscheinlichkeit eines Brandes der elektrischen Maschine führt.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet.

Es zeigt:

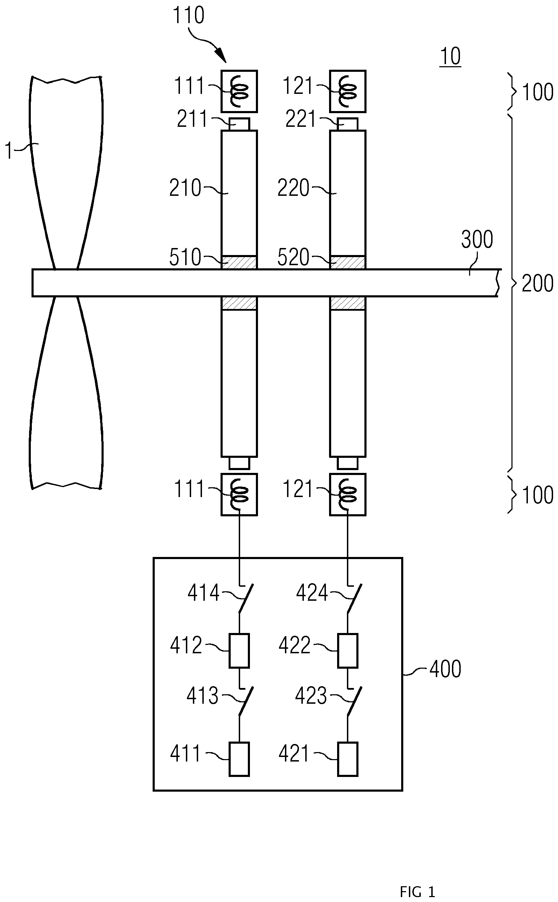

- FIG 1: eine mit mehreren Teilläufern und mehreren Statorwicklungssystemen ausgestattete, redundante erfindungsgemäße elektrische Maschine im Querschnitt.

Es sei angemerkt, dass sich Begriffe wie "axial" und "radial" auf die in der jeweiligen Figur bzw. im jeweils beschriebenen Beispiel zum Einsatz kommende Welle bzw. Achse beziehen. Mit anderen Worten beziehen sich die Richtungen axial und radial stets auf eine Drehachse des jeweiligen Läufers.

Die FIG 1 zeigt exemplarisch und vereinfacht eine erfindungsgemäße als Elektromotor bzw. Antriebsanordnung ausgebildete elektrische Maschine 10. Es sei erwähnt, dass der Aufbau der im Folgenden beschriebenen Maschine rein exemplarisch ist. Es kann als bekannt vorausgesetzt werden, dass je nach Ausbildung der elektrischen Maschine als Generator oder als Elektromotor und/oder als bspw. Radial- oder Axialflussmaschine mit einem als Innen- oder auch als Außenläufer ausgebildeten Rotor etc. die verschiedenen Komponenten der Maschine unterschiedlich angeordnet sein können.

Der Elektromotor 10 ist vorgesehen Z um ein Vortriebsmittel 1 eines Luftfahrzeugs (nicht dargestellt), bspw. einen Propeller 1, derart anzutreiben, dass sich der Propeller 1 in einer Arbeitsdrehrichtung dreht, um einen Vortrieb für das Luftfahrzeug zu erzeugen. Andere Verwendungen der elektrischen Maschine zu Antriebszwecken oder zu anderen Anwendungen sind natürlich denkbar. Hierzu sind der Elektromotor 10 und der Propeller 1 über eine Welle 300 des Elektromotors 10 verbunden, wobei der Elektromotor 10 wie im Folgenden beschrieben eingerichtet ist, um die Welle 300 und mit ihr den Propeller 1 in der Arbeitsdrehrichtung in Rotation zu versetzen.

Die grundsätzliche Funktionsweise eines Elektromotors 10 kann als bekannt vorausgesetzt werden, wird daher im Folgenden nur oberflächlich erläutert. Der Elektromotor 10 weist ein Statorsystem 100 sowie eine als Innenläufer ausgebildete Läuferanordnung 200 auf, wobei die Läuferanordnung 200 innerhalb des Statorsystems 100 angeordnet ist und im Betriebszustand der elektrischen Maschine 10 in der Arbeitsdrehrichtung um eine Rotationsachse rotiert. Die Läuferanordnung 200 ist mit der Welle 300 verbunden, so dass eine Rotation der Läuferanordnung 200 in der Arbeitsdrehrichtung über die Welle 300 auf den Propeller 1 übertragbar ist. Dabei ist vorgesehen, dass die Welle 300 stets in der gleichen Arbeitsdrehrichtung betrieben wird.

Das Statorsystem 100 weist eine Statorwicklungsanordnung 110 mit einer Vielzahl von elektrischen Leitungen auf, in die mit Hilfe einer Energieversorgung 400 ein elektrischer Strom eingespeist werden kann, was zum Aufbau eines Magnetfeldes führt.

Die Läuferanordnung 200 weist magnetische Mittel 211, 221 auf, die bspw. insbesondere für den Fall, dass es sich bei dem Elektromotor 10 um eine permanenterregte Maschine 10 handelt, als Permanentmagnete ausgebildet sein können. Alternativ können die magnetischen Mittel 211, 221 als erregte bzw. erregbare Wicklungen ausgebildet sein. Im Folgenden wird exemplarisch angenommen, dass es sich um Permanentmagnete 211, 221 handelt.

Die Statorwicklungsanordnung 110 und die magnetischen Mittel 211, 221 der Läuferanordnung 200 sind derart ausgebildet und zueinander angeordnet, dass sie im Betriebszustand der elektrischen Maschine 10 elektromagnetisch miteinander wechselwirken, so dass die Maschine 10 als Elektromotor arbeitet. Dieses Konzept einschließlich der generellen Bedingungen für die Ausbildung und Anordnung der Statorwicklungsanordnung 110 und die magnetischen Mittel 211, 221 bzw. von Statorsystem 100 und Läuferanordnung 200 sind an sich bekannt und werden daher im Folgenden nicht näher erläutert. Es sei lediglich erwähnt, dass zum Betreiben der elektrischen Maschine 100 als Elektromotor die Statorwicklungsanordnung 110 mit Hilfe der Energieversorgung 400 mit elektrischem Strom beaufschlagt wird, was bewirkt, dass die Statorwicklungsanordnung 110 dementsprechende Magnetfelder erzeugt, welche mit den Magnetfeldern der Permanentmagnete 211, 221 der Läuferanordnung 200 in elektromagnetische Wechselwirkung treten. Dies resultiert bekanntermaßen darin, dass bei geeigneter Ausbildung und Anordnung der genannten Komponenten zueinander die Läuferanordnung 200 und mit ihr die Welle 300 sowie der Propeller 1 in Rotation versetzt werden.

Die Läuferanordnung 200 umfasst vorteilhafterweise eine Vielzahl von Teilläufern 210, 220, wobei im Folgenden der Einfachheit halber, jedoch nicht einschränkend, davon ausgegangen wird, dass zwei Teilläufer 210, 220 vorhanden sind. Die Teilläufer 210, 220 sind in axialer Richtung hintereinander und koaxial zueinander sowie zur Welle 300 auf der Welle 300 angeordnet, um die Welle 300 in der Arbeitsdrehrichtung in Rotation zu versetzen. Entlang des Umfangs des ersten Teilläufers 210 sind Permanentmagnete 211 angeordnet. Dementsprechend sind entlang des Umfangs des zweiten Teilläufers 220 ebenfalls Permanentmagente 221 angeordnet. Die Teilläufer 210, 220 sind unabhängig voneinander, d.h. insbesondere gegeneinander verdrehbar.

Die Statorwicklungsanordnung 110 umfasst eine der Anzahl der Teilläufer 210, 220 entsprechende Anzahl von Statorwicklungssystemen 111, 121, in die jeweils wie oben beschrieben durch die Energieversorgung 400 elektrische Ströme zur Erzeugung entsprechender Magnetfelder eingespeist werden können. Dabei sind die Statorwicklungssysteme 111, 121 unabhängig voneinander, d.h. es können insbesondere verschiedene elektrische Ströme in die verschiedenen Statorwicklungssysteme 111, 121 eingespeist werden. Hierzu weist die Energieversorgung 400 eine erste und eine zweite Stromquelle 411, 421 sowie einen ersten und einen zweiten Umrichter 412, 422 auf. Die erste Stromquelle 411 ist über den ersten Umrichter 412 mit dem ersten Statorwicklungssystem 111 und die zweite Stromquelle 421 ist über den zweiten Umrichter 422 mit dem zweiten Statorwicklungssystem 121 verbunden. Erfindungsgemäß sind die Umrichter 412, 422 eingerichtet und durch eine Antriebssteuerung 600 gesteuert, um die von der jeweiligen Stromquelle 411, 421 bereitgestellte elektrische Energie in die zum Betreiben des jeweiligen Statorwicklungssystems 111, 121 geeignete elektrische Spannung zu verarbeiten. Wie die Teilläufer 210, 220 sind auch die Statorwicklungssysteme 111, 121 in axialer Richtung hintereinander und koaxial zueinander sowie zur Welle 300 angeordnet.

Der erste Teilläufer 210 ist dabei dem ersten Statorwicklungssystem 111 zugeordnet und der zweite Teilläufer 220 ist dem zweiten Statorwicklungssystem 121 zugeordnet, wobei jeder der Teilläufer 210, 220 gegenüber dem ihm zugeordneten Statorwicklungssystem 111, 121 und gegenüber dem jeweils anderen Teilläufer 220, 210 rotierbar ist. Desweiteren sind einander zugeordnete Teilläufer 210, 220 und Statorwicklungssysteme 111, 121 derart ausgebildet und zueinander angeordnet, dass sie wie oben beschrieben derart elektromagnetisch miteinander wechselwirken können, dass die elektrische Maschine 10 als Elektromotor arbeitet und die Welle 300 angetrieben wird. Im Normalbetrieb, d.h. solange kein Fehlerfall vorliegt, können beide Teilläufer 210, 220 jeweils ein in die Arbeitsdrehrichtung wirkendes Drehmoment auf die Welle 300 ausüben, so dass sich diese beiden Drehmomente zu einem Gesamtdrehmoment addieren.

Der erste Teilläufer 210 und das erste Statorwicklungssystem 111 bilden ein erstes Teilantriebssystem T1, welchem zusätzlich die erste Stromquelle 411 und ggf. weiterhin der erste Umrichter 412 zugeordnet sein können. Analog bilden der zweite Teilläufer 220 und das zweite Statorwicklungssystem 121 ein zweites Teilantriebssystem T2, welchem wiederum zusätzlich die zweite Stromquelle 421 und ggf. weiterhin der zweite Umrichter 422 zugeordnet sein können.

Der erste und der zweite Teilläufer 210, 220 sind jeweils über einen ersten bzw. einen zweiten Freilauf 510, 520 derart mit der Welle 300 verbunden, dass die Teilläufer 210, 220 nur in der Arbeitsdrehrichtung ein Drehmoment auf die Welle 300 übertragen können. Die im Betriebszustand des Elektromotors 10 über die Statorwicklungssysteme 111, 121 in die Teilläufer 210, 220 eingeprägten Drehmomente werden so auf der gemeinsamen Welle 300 in Arbeitsdrehrichtung addiert. In der der Arbeitsdrehrichtung entgegengesetzten Drehrichtung kann aufgrund der Freiläufe 510, 520 keiner der Teilläufer 210, 220 ein Drehmoment auf die gemeinsame Welle 300 übertragen. Darüber hinaus -und für den hier beleuchteten Anwendungsfall besonders relevant- garantiert die Verwendung der Freiläufe 510, 520, dass seitens der Welle 300, welche immer in der gleichen Arbeitsdrehrichtung rotiert, kein Drehmoment auf die Teilläufer 210, 220 übertragen werden kann.

Wenn also bspw. der erste Teilläufer 210 aufgrund eines Fehlerfalles im ersten Teilantriebssystem T1 nicht mehr aktiv durch das ihm zugeordnete erste Statorwicklungssystem 111 in Rotation versetzt werden kann, der zweite Teilläufer 220 sich aber noch im normalen Betriebszustand befindet und dementsprechend ein Drehmoment auf die Welle 300 erzeugt, wird diese Rotation der Welle 300 in der Arbeitsdrehrichtung aufgrund des ersten Freilaufes 510 nicht auf den ersten Teilläufer 210 übertragen, so dass dieser nicht rotiert und dementsprechend keine Ströme in das erste Statorwicklungssystem 111 induziert. Das Auftreten eines Fehlerfalles wird mit Hilfe der Antriebssteuerung 600 festgestellt, welche die elektrische Maschine 100 und insbesondere die Teilantriebssysteme T1, T2 bzw. deren diverse Komponenten hinsichtlich des Auftretens eines Fehlerfalls überwacht.

Bei Detektion eines solchen Fehlerfalles wird darüber Z hinaus erfindungsgemäß, ebenfalls ausgelöst durch die Antriebssteuerung 600, die Stromquelle 411, 421 desjenigen Teilantriebssystems T1, T2, in dem bzw. für das der Fehlerfall detektiert wurde, galvanisch von diesem fehlerhaften Teilantriebssystem T1, T2 getrennt. Hierfür stehen Schalter 413, 414, 423, 424 zur Verfügung, wobei in beiden Teilantriebssystemen T1, T2 jeweils ein Schalter 413, 423 zwischen Stromquelle 411, 421 und Umrichter 412, 422 des jeweiligen Teilantriebssystems T1, T2 geschaltet ist, um durch Öffnen des jeweiligen Schalters 413, 423 die elektrische Verbindung zwischen Stromquelle 411, 421 und Umrichter 412, 422 trennen zu können. Desweiteren ist in beiden Teilantriebssystemen T1, T2 jeweils ein weiterer Schalter 414, 424 zwischen Umrichter 412, 422 und Statorwicklungssystem 111, 121 des jeweiligen Teilantriebssystems T1, T2 geschaltet, um durch Öffnen des jeweiligen weiteren Schalters 414, 424 die elektrische Verbindung zwischen Umrichter 412, 422 und Statorwicklungssystem 111, 121 trennen zu können. Das Öffnen der weiteren Schalter 414, 424 bewirkt damit zwangsläufig auch ein Trennen des jeweiligen Statorwicklungssystems 111, 121 von der ihm zugeordneten Stromquelle 411, 421. Wiederum bspw. für den Fall, dass der Fehlerfall im ersten Teilantriebssystem T1 aufgetreten ist und detektiert wurde, wird die erste Stromquelle 411 galvanisch von dem ersten Statorwicklungssystem 111 getrennt. Wie beschrieben kann diese Trennung mit Hilfe der Schalter 413, 414 des ersten Teilantriebssystems T1 in Stromflussrichtung vor und/oder hinter dem Umrichter 412 erfolgen, indem einer der Schalter 413, 414 oder ggf. beide Schalter 413, 414 geöffnet werden. In analoger Weise wird für den Fall, dass der Fehlerfall im zweiten Teilantriebssystem T2 aufgetreten ist, die zweite Stromquelle 421 galvanisch von dem zweiten Statorwicklungssystem 121 getrennt. Diese Trennung kann mit Hilfe der Schalter 423, 424 in Stromflussrichtung vor und/oder hinter dem Umrichter 422 erfolgen.

Das Öffnen des jeweiligen Schalters 413, 414, 423, 424 wird mit Hilfe der Antriebssteuerung 600 bewirkt. Die Antriebssteuerung 600 überwacht die elektrische Maschine 10 bzw. die Antriebsanordnung gemäß Fig. 1 hinsichtlich des Vorliegens eines Fehlerfalls. Je nachdem, an welchem Ort bzw. an welcher Komponente der Teilantriebssysteme T1, T2 der Fehlerfall auftritt, legt die Antriebssteuerung 600 Z erfindungsgemäß fest, welcher der Schalter 413, 414, 423, 424 geöffnet wird. Bspw. wenn der Fehler im ersten Statorwicklungssystem 111 liegt, kann der zwischen dem Statorwicklungssystem 111 und dem Umrichter 412 angeordnete Schalter 414 geöffnet werden. Der Umrichter 412 bleibt mit der Stromquelle 411 verbunden und steht somit ggf. für andere Anwendungen zur Verfügung. Wenn der Fehler in der Stromquelle 411 oder im Umrichter 412 detektiert wird, kann vorzugsweise der zwischen Stromquelle 411 und Umrichter 412 angeordnete Schalter 413 geöffnet werden.

Es sei erwähnt, dass die einzelnen Teilantriebssysteme T1, T2 bzw. deren Teilläufer 210, 220 sowie Statoren und Statorwicklungssysteme 111, 121 gleiche oder auch unterschiedliche Durchmesser sowie gleiche oder unterschiedliche Achslängen haben können. Auch können die Teilantriebsysteme T1, T2 konzentrisch ineinander geschachtelte elektrische Maschinen sein, die über axial hintereinanderliegende Freiläufe 510, 520 mit der Antriebswelle 300 verbunden werden.

Die Teilläufer 210, 220 wurden im Zusammenhang mit der Figur 1 als Innenläufer dargestellt und erläutert, wobei jeder der Teilläufer 210, 220 radial innerhalb des jeweils zugeordneten Statorwicklungssystems 111, 121 angeordnet ist. Alternativ können die Teilläufer 210, 220 auch bspw. als Außenläufer ausgebildet sein, so dass die zugeordneten Statorwicklungssysteme 111, 121 radial innerhalb des jeweils zugeordneten Teilläufers 210, 220 angeordnet sind. Das erfindungsgemäße Konzept kann auch bei elektrischen Maschinen mit anderen Topologien eingesetzt werden, bspw. bei Transversalflussmaschinen, bei Maschinen mit Scheibenläufern etc.

Wie einleitend erwähnt kann die beschriebene elektrische Maschine 10 aufgrund der Redundanz und der wesentlich verbesserten Ausfallsicherheit besonders vorteilhaft in einem Luftfahrzeug eingesetzt werden. Andere Anwendungen der Maschine 10 sind jedoch ebenso denkbar, bspw. in elektrisch angetriebenen Schienen- oder Wasserfahrzeugen.

## Patentansprüche

1. Elektrische Maschine (10) zum Antreiben eines Vortriebsmittels (1) eines Luftfahrzeugs, Z aufweisend
- ein Statorsystem (100) mit zumindest einem ersten und einem zweiten Statorwicklungssystem (111, 121),
- eine Energieversorgung (400) zur Versorgung der Statorwicklungssysteme (111, 121) mit elektrischer Energie,
- eine Läuferanordnung (200) mit zumindest einem ersten und einem zweiten Teilläufer (210, 220) sowie
- eine gemeinsame Welle (300) zum Übertragen einer von jedem der Teilläufer (210, 220) zur Verfügung gestellten Antriebsleistung auf das Vortriebsmittel (1), wobei
- der erste Teilläufer (210) dem ersten Statorwicklungssystem (111) und der zweite Teilläufer (220) dem zweiten Statorwicklungssystem (121) zugeordnet ist,
- jeder der Teilläufer (210, 220) gegenüber dem ihm zugeordneten Statorwicklungssystem (111, 121) und gegenüber dem jeweils anderen Teilläufer (220, 210) rotierbar ist,
- einander zugeordnete Teilläufer (210, 220) und Statorwicklungssysteme (111, 121) ein jeweiliges Teilantriebssystem (T1, T2) bilden und derart ausgebildet und zueinander angeordnet sind, dass sie elektromagnetisch miteinander wechselwirken können,
- jeder der Teilläufer (210, 220) mit Hilfe eines jeweiligen Freilaufs (510, 520) derart mit der Welle (300) verbunden ist, dass der jeweilige Teilläufer (210, 220) nur in einer Arbeitsdrehrichtung der Welle (300) ein Drehmoment auf die Welle (300) übertragen kann und mechanisch von der Welle (300) entkoppelt werden kann, wodurch die Welle (300) immer in der gleichen Arbeitsdrehrichtung rotiert und kein Drehmoment von der Welle (300) auf die Teilläufer (210,220) übertragen werden kann,
- die Energieversorgung (400) für das erste Statorwicklungssystem (111) eine erste, dem ersten Teilantriebssystem (T1) zugeordnete Stromquelle (411) und für das zweite Statorwicklungssystem (121) eine zweite, dem zweiten Teilantriebssystem (T2) zugeordnete Stromquelle (421) aufweist, wobei die Stromquellen (411, 421) eingerichtet sind, um das jeweilige Statorwicklungssystem (111, 121) mit elektrischem Strom zu versorgen, und wobei
- die Teilantriebsysteme (T1, T2) jeweils einen durch eine Antriebssteuerung (600) gesteuerten Z Umrichter (412, 422) aufweisen, welcher jeweils elektrisch zwischen die Stromquelle (411, 421) und das Statorwicklungssystem (111, 121) des jeweiligen Teilantriebssystems (T1, T2) geschaltet ist, Z wobei Z die Antriebssteuerung (600) eingerichtet ist, um
- die elektrische Maschine (10) und deren Z Teilantriebssysteme (T1, T2) hinsichtlich des Vorliegens eines Fehlerfalls zu überwachen,
- bei Detektion eines Fehlerfalls in einem der Teilantriebssysteme (T1, T2) eine galvanische Trennung des Statorwicklungssystems (111, 121) dieses Teilantriebssystems (T1, T2) von der Z zugeordneten Stromquelle (411,421) herbeizuführen, **dadurch gekennzeichnet, dass** Z
- in jedem der Teilantriebssysteme (T1, T2) jeweils eine Schaltergruppe mit jeweils zumindest zwei Schaltern (413, 414, 423, 424) vorgesehen sind, wobei zumindest ein Schalter (413, 423) der jeweiligen Schaltergruppe elektrisch zwischen der jeweiligen Stromquelle (411, 421) und dem jeweiligen Umrichter (412, 422) angeordnet ist und zumindest ein Schalter (414, 424) der jeweiligen Schaltergruppe zwischen dem jeweiligen Umrichter (412, 422) und dem jeweiligen Statorwicklungssystem (111, 121) angeordnet ist,
- die galvanische Trennung des Statorwicklungssystems (111, 121) des Teilantriebssystems (T1, T2), in dem ein Fehler detektiert wurde, wobei in dem betroffenen Statorwicklungssystem (111,112) eine Übertemperatur oder ein Isolationsfehler festgestellt oder ein Ausfall der zugeordneten Stromquelle (411,421) detektiert wurde, von der zugeordneten Stromquelle (411,421) durch Öffnen von zumindest einem der Schalter (413, 414, 423, 424) der Schaltergruppe dieses Teilantriebssystems (T1, T2) realisiert wird, und
- die Antriebssteuerung (600) eingerichtet ist, um das Öffnen des jeweiligen Schalters (413, 414, 423, 424) zu veranlassen, wobei die Antriebssteuerung (600) desweiteren derart eingerichtet ist, dass sie in Abhängigkeit davon an welcher Komponente der Teilantriebssysteme (T1,T2) der Fehler Teilantriebssystem (T1, T2) auftritt, auswählt, welcher Schalter (413, 414, 423, 424) der jeweiligen Schaltergruppe geöffnet wird um hierbei den Stromfluss zu unterbrechen.

2. Elektrische Maschine (10) nach Anspruch 1, **dadurch gekennzeichnet, dass** die Teilläufer (210, 220) konzentrisch und in axialer Richtung gesehen hintereinander angeordnet sind.

3. Elektrische Maschine (10) nach einem der Ansprüche 1 bis 2, **dadurch gekennzeichnet, dass** die Statorwicklungssysteme (111, 121) in axialer Richtung gesehen hintereinander angeordnet sind.

4. Elektrische Maschine (10) nach einem der Ansprüche 2 bis 3, **dadurch gekennzeichnet, dass** jeweils eine der Komponenten aus einer Komponentengruppe umfassend eines der Statorwicklungssysteme (111, 121) und den diesem Statorwicklungssystem (111, 121) zugeordneten Teilläufer (210, 220) radial innerhalb der anderen Komponente der Komponentengruppe angeordnet ist.

5. Elektrische Maschine (10) nach einen der Ansprüche 1 bis 4, **dadurch gekennzeichnet, dass** die Statorwicklungssysteme (111, 121) galvanisch voneinander getrennt sind.

6. Verfahren zum Betreiben einer elektrischen Maschine (10) zum Antreiben eines Vortriebsmittels (1) eines Luftfahrzeugs nach einem der Ansprüche 1 bis 5 aufweisend
- ein Statorsystem (100) mit zumindest einem ersten und einem zweiten Statorwicklungssystem (111, 121),
- eine Energieversorgung (400) zur Versorgung der Statorwicklungssysteme (111, 121) mit elektrischer Energie,
- eine Läuferanordnung (200) mit zumindest einem ersten und einem zweiten Teilläufer (210, 220)
- eine gemeinsame Welle (300) zum Übertragen einer von jedem der Teilläufer (210, 220) zur Verfügung gestellten Antriebsleistung auf das Vortriebsmittel (1), wobei
- der erste Teilläufer (210) dem ersten Statorwicklungssystem (111) und der zweite Teilläufer (220) dem zweiten Statorwicklungssystem (121) zugeordnet ist,
- jeder der Teilläufer (210, 220) gegenüber dem ihm zugeordneten Statorwicklungssystem (111, 121) und gegenüber dem jeweils anderen Teilläufer (220, 210) rotierbar ist,
- einander zugeordnete Teilläufer (210, 220) und Statorwicklungssysteme (111, 121) ein jeweiliges Teilantriebssystem (T1, T2) bilden und derart ausgebildet und zueinander angeordnet sind, dass sie elektromagnetisch miteinander wechselwirken können,
und wobei
- jeder der Teilläufer (210, 220) mit Hilfe eines jeweiligen Freilaufs (510, 520) derart mit der Welle (300) verbunden ist, dass der jeweilige Teilläufer (210, 220) nur in einer Arbeitsdrehrichtung der Welle (300) ein Drehmoment auf die Welle (300) übertragen kann und mechanisch von der Welle (300) entkoppelt werden kann, wodurch die Welle (300) immer in der gleichen Arbeitsdrehrichtung rotiert und kein Drehmoment von der Welle (300) auf die Teilläufer (210,220) übertragen werden kann, Z sowie weiterhin aufweisend
- eine Antriebssteuerung (600) **dadurch gekennzeichnet, dass** durch die Antriebssteuerung (600)
- die elektrische Maschine (10) und deren Z Teilantriebssysteme (T1, T2) hinsichtlich des Vorliegens eines Fehlerfalls überwacht werden, und wobei die Teilantriebssysteme (T1, T2) jeweils eine Stromquelle (411, 421) aufweisen, mit der das Statorwicklungssystem (111, 121) des jeweiligen Teilantriebssystems (T1, T2) mit elektrischem Strom versorgt wird, wobei für den Fall, dass in einem der Teilantriebssysteme (T1,T2) ein Fehlerfall festgestellt wird, das Statorwicklungssystem (111, 121) des Teilantriebssystems (T1, T2) , in dem ein Fehler detektiert wurde, von der Stromquelle (411, 421) dieses Teilantriebssystems (T1, T2) Z galvanisch Z getrennt wird, die Teilantriebssysteme (T1, T2) jeweils einen durch die Antriebssteuerung (600) gesteuerten Z Umrichter (412, 422) aufweisen, welcher jeweils elektrisch zwischen die Stromquelle (411, 421) und das Statorwicklungssystem (111, 121) des jeweiligen Teilantriebssystems (T1, T2) geschaltet ist, wobei im Fehlerfall im Teilantriebssystem (T1, T2) , in dem ein Fehler detektiert wurde, wobei in dem betroffenen Statorwicklungssystem (111,112) eine Übertemperatur oder ein Isolationsfehler festgestellt oder ein Ausfall der zugeordneten Stromquelle (411,421) detektiert wurde, eine erste elektrische Verbindung zwischen Stromquelle (411, 421) und Umrichter (412, 422) dieses Teilantriebssystems (T1, T2) oder eine zweite elektrische Verbindung zwischen Umrichter (412, 422) und Statorwicklungssystem (111, 121) des fehlerhaften Teilantriebssystems (T1, T2) getrennt wird, und wobei in Abhängigkeit davon an welcher Komponente der Teilantriebssysteme (T1,T2) der Fehler im Teilantriebssystem (T1, T2) auftritt, die erste und/oder die zweite elektrische Verbindung in diesem Teilantriebssystem (T1, T2) getrennt wird.

## Claims

1. Electrical machine (10) for driving a means of propulsion (1) of an aircraft having
- a stator system (100) comprising at least one first and one second stator winding system (111, 121),
- an energy supply device (400) for supplying the stator winding systems (111, 121) with electrical energy,
- a rotor arrangement (200) comprising at least one first and one second partial rotor (210, 220) and also
- a common shaft (300) for transmitting a drive power, which is provided by each of the partial rotors (210, 220), to the means of propulsion (1), wherein
- the first partial rotor (210) is associated with the first stator winding system (111) and the second partial rotor (220) is associated with the second stator winding system (121),
- each of the partial rotors (210, 220) can be rotated in relation to the stator winding system (111, 121) associated with it and in relation to the respectively other partial rotor (220, 210),
- partial rotors (210, 220) and stator winding systems (111, 121) which are associated with one another form a respective partial drive system (T1, T2) and are designed and arranged in relation to one another in such a way that they can electromagnetically interact with one another,
- each of the partial rotors (210, 220) is connected to the shaft (300) with the aid of a respective freewheeling device (510, 520) in such a way that the respective partial rotor (210, 220) can transmit a torque to the shaft (300) only in one working direction of rotation of the shaft (300) and can be mechanically uncoupled from the shaft (300), as a result of which the shaft (300) always rotates in the same working direction of rotation and no torque can be transmitted from the shaft (300) to the partial rotors (210, 220),
- the energy supply device (400) has a first current source (411), which is associated with the first partial drive system (T1), for the first stator winding system (111) and has a second current source (421), which is associated with the second partial drive system (T2), for the second stator winding system (121), wherein the current sources (411, 421) are designed to supply the respective stator winding system (111, 121) with electric current, and wherein
- the partial drive systems (T1, T2) each have a converter (412, 422) which is controlled by a drive controller (600) and is in each case electrically connected between the current source (411, 421) and the stator winding system (111, 121) of the respective partial drive system (T1, T2), wherein the drive controller (600) is designed
- to monitor the electrical machine (10) and its partial drive systems (T1, T2) in respect of the presence of a fault,
- when a fault is detected in one of the partial drive systems (T1, T2), to cause DC-isolation of the stator winding system (111, 121) of this partial drive system (T1, T2) from the associated current source (411, 421), **characterized in that**
- in each case one group of switches each comprising at least two switches (413, 414, 423, 424) is provided in each of the partial drive systems (T1, T2), wherein at least one switch (413, 423) of the respective group of switches is electrically arranged between the respective current source (411, 421) and the respective converter (412, 422) and at least one switch (414, 424) of the respective group of switches is arranged between the respective converter (412, 422) and the respective stator winding system (111, 121),
- the DC-isolation of the stator winding system (111, 121) of the partial drive system (T1, T2) in which a fault was detected, wherein an overtemperature or an insulation fault was established in the stator winding system (111, 112) in question or a failure of the associated current source (411, 421) was detected, from the associated current source (411, 421) is realized by opening at least one of the switches (413, 414, 423, 424) of the group of switches of this partial drive system (T1, T2), and
- the drive controller (600) is designed to initiate opening of the respective switch (413, 414, 423, 424), wherein the drive controller (600) is further designed in such a way that it selects which switch (413, 414, 423, 424) of the respective group of switches is opened depending on which component of the partial drive systems (T1, T2) is affected by the fault in the partial drive system (T1, T2), in order to interrupt the current flow in this way.

2. Electrical machine (10) according to Claim 1, **characterized in that** the partial rotors (210, 220) are arranged concentrically and one behind the other as seen in the axial direction.

3. Electrical machine (10) according to either of Claims 1 and 2, **characterized in that** the stator winding systems (111, 121) are arranged one behind the other as seen in the axial direction.

4. Electrical machine (10) according to either of Claims 2 and 3, **characterized in that** in each case one of the components of a group of components comprising one of the stator winding systems (111, 121) and the partial rotor (210, 220) which is associated with said stator winding system (111, 121) is arranged radially within the other component of the group of components.

5. Electrical machine (10) according to one of Claims 1 to 4, **characterized in that** the stator winding systems (111, 121) are DC-isolated from one another.

6. Method for operating an electrical machine (10) for driving a means of propulsion (1) of an aircraft according to one of Claims 1 to 5 having
- a stator system (100) comprising at least one first and one second stator winding system (111, 121),
- an energy supply device (400) for supplying the stator winding systems (111, 121) with electrical energy,
- a rotor arrangement (200) comprising at least one first and one second partial rotor (210, 220),
- a common shaft (300) for transmitting a drive power, which is provided by each of the partial rotors (210, 220), to the means of propulsion (1), wherein
- the first partial rotor (210) is associated with the first stator winding system (111) and the second partial rotor (220) is associated with the second stator winding system (121),
- each of the partial rotors (210, 220) can be rotated in relation to the stator winding system (111, 121) associated with it and in relation to the respectively other partial rotor (220, 210),
- partial rotors (210, 220) and stator winding systems (111, 121) which are associated with one another form a respective partial drive system (T1, T2) and are designed and arranged in relation to one another in such a way that they can electromagnetically interact with one another, and wherein
- each of the partial rotors (210, 220) is connected to the shaft (300) with the aid of a respective freewheeling device (510, 520) in such a way that the respective partial rotor (210, 220) can transmit a torque to the shaft (300) only in one working direction of rotation of the shaft (300) and can be mechanically uncoupled from the shaft (300), as a result of which the shaft (300) always rotates in the same working direction of rotation and no torque can be transmitted from the shaft (300) to the partial rotors (210, 220), and also furthermore having
- a drive controller (600), **characterized in that** the drive controller (600)
- monitors the electrical machine (10) and its partial drive systems (T1, T2) in respect of the presence of a fault, and
wherein the partial drive systems (T1, T2) each have a current source (411, 421) by way of which the stator winding system (111, 121) of the respective partial drive system (T1, T2) is supplied with electric current, wherein, if a fault is established in one of the partial drive systems (T1, T2), the stator winding system (111, 121) of the partial drive system (T1, T2) in which a fault was detected is DC-isolated from the current source (411, 421) of this partial drive system (T1, T2),
the partial drive systems (T1, T2) each have a converter (412, 422) which is controlled by the drive controller (600) and is in each case electrically connected between the current source (411, 421) and the stator winding system (111, 121) of the respective partial drive system (T1, T2), wherein, in the event of a fault in the partial drive system (T1, T2) in which a fault was detected, wherein an overtemperature or an insulation fault was established in the stator winding system (111, 112) in question or a failure of the associated current source (411, 421) was detected, a first electrical connection between the current source (411, 421) and the converter (412, 422) of this partial drive system (T1, T2) or a second electrical connection between the converter (412, 422) and the second stator winding system (111, 121) of the faulty partial drive system (T1, T2) is isolated, and wherein the first and/or the second electrical connection in this partial drive system (T1, T2) is isolated depending on which component of the partial drive systems (T1, T2) is affected by the fault in the partial drive system (T1, T2).

## Revendications

1. Machine électrique (10) permettant d'entraîner un moyen de propulsion (1) d'un aéronef, présentant
- un système de stators (100) doté au moins d'un premier et d'un deuxième système d'enroulement de stator (111, 121),
- une alimentation en énergie (400) destinée à alimenter les systèmes d'enroulement de stator (111, 121) en énergie électrique,
- un agencement de rotors (200) doté au moins d'un premier et d'un deuxième rotor partiel (210, 220), et
- un arbre commun (300) destiné à transmettre au moyen de propulsion (1) une puissance d'entraînement fournie par chacun des rotors partiels (210, 220),
dans lequel
- le premier rotor partiel (210) est associé au premier système d'enroulement de stator (111) et le deuxième rotor partiel (220) est associé au deuxième système d'enroulement de stator (121),
- chacun des rotors partiels (210, 220) peut tourner par rapport au système d'enroulement de stator (111, 121) qui lui est associé et par rapport à l'autre rotor partiel (220, 210) respectivement,
- des rotors partiels (210, 220) et des systèmes d'enroulement de stator (111, 121) associés les uns aux autres forment un système d'entraînement partiel (T1, T2) respectif et sont réalisés et disposés les uns par rapport aux autres de telle sorte qu'ils peuvent interagir de manière électromagnétique entre eux,
- chacun des rotors partiels (210, 220) est relié à l'arbre (300) à l'aide d'une roue libre (510, 520) respective de telle sorte que le rotor partiel (210, 220) respectif ne peut transmettre un couple à l'arbre (300) que dans un sens de rotation de travail de l'arbre (300) et peut être découplé mécaniquement de l'arbre (300), de manière à ce que l'arbre (300) tourne toujours dans le même sens de rotation de travail et aucun couple ne puisse être transmis de l'arbre (300) aux rotors partiels (210, 220),
- l'alimentation en énergie (400) présente pour le premier système d'enroulement de stator (111) une première source de courant (411) associée au premier système d'entraînement partiel (T1) et présente pour le deuxième système d'enroulement de stator (121) une deuxième source de courant (421) associée au deuxième système d'entraînement partiel (T2), les sources de courant (411, 421) étant aménagées pour alimenter en courant électrique le système d'enroulement de stator (111, 121) respectif, et dans lequel
- les systèmes d'entraînement partiels (T1, T2) présentent respectivement un convertisseur (412, 422) commandé par un dispositif d'entraînement (600) qui est respectivement connecté électriquement entre la source de courant (411, 421) et le système d'enroulement de stator (111, 121) du système d'entraînement partiel (T1, T2) respectif,
la commande d'entraînement (600) étant aménagée pour
- surveiller la machine électrique (10) et ses systèmes d'entraînement partiels (T1, T2) quant à la présence d'un cas de panne,
- si un cas de panne est détecté dans l'un des systèmes d'entraînement partiels (T1, T2), provoquer une séparation galvanique du système d'enroulement de stator (111, 121) de ce système d'entraînement partiel (T1, T2) de la source de courant (411, 421) associée, **caractérisée en ce que**
- dans chacun des systèmes d'entraînement partiels (T1, T2), respectivement un groupe de commutateurs doté respectivement d'au moins deux commutateurs (413, 414, 423, 424) est prévu, au moins un commutateur (413, 423) du groupe de commutateurs respectif étant disposé électriquement entre la source de courant (411, 421) respective et le convertisseur respectif (412, 422), et au moins un commutateur (414, 424) du groupe de commutateurs respectif est disposé entre le convertisseur (412, 422) respectif et le système d'enroulement de stator (111, 121) respectif,
- la séparation galvanique du système d'enroulement de stator (111, 121) du système d'entraînement partiel (T1, T2), dans lequel une panne a été détectée, une température excessive ou une panne d'isolation ayant été constatée ou une défaillance de la source de courant (411, 421) associée ayant été détectée dans le système d'enroulement de stator (111, 112) concerné, de la source de courant (411, 421) associée est réalisée par l'ouverture d'au moins l'un des commutateurs (413, 414, 423, 424) du groupe de commutateurs de ce système d'entraînement partiel (T1, T2), et
- la commande d'entraînement (600) est aménagée pour provoquer l'ouverture du commutateur (413, 414, 423, 424) respectif, la commande d'entraînement (600) étant en outre aménagée de telle sorte qu'en fonction du composant des systèmes d'entraînement partiels (T1, T2) auquel apparaît la panne dans le système d'entraînement partiel (T1, T2) elle sélectionne quel commutateur (413, 414, 423, 424) du groupe de commutateurs respectif est ouvert afin d'interrompre ainsi le flux de courant.

2. Machine électrique (10) selon la revendication 1, **caractérisée en ce que** les rotors partiels (210, 220) sont disposés de manière concentrique et l'un après l'autre, vus dans la direction axiale.

3. Machine électrique (10) selon l'une quelconque des revendications 1 à 2, **caractérisée en ce que** les systèmes d'enroulement de stator (111, 121) sont disposés l'un après l'autre, vus dans la direction axiale.

4. Machine électrique (10) selon l'une quelconque des revendications 2 à 3, **caractérisée en ce que** respectivement l'un des composants issu d'un groupe de composants comprenant l'un des systèmes d'enroulement de stator (111, 121) et le rotor partiel (210, 220) associé à ce système d'enroulement de stator (111, 121) est disposé radialement à l'intérieur de l'autre composant du groupe de composants.

5. Machine électrique (10) selon l'une quelconque des revendications 1 à 4, **caractérisée en ce que** les systèmes d'enroulement de stator (111, 121) sont galvaniquement séparés l'un de l'autre.

6. Procédé d'exploitation d'une machine électrique (10) permettant d'entraîner un moyen de propulsion (1) d'un aéronef selon l'une quelconque des revendications 1 à 5, présentant
- un système de stators (100) doté au moins d'un premier et d'un deuxième système d'enroulement de stator (111, 121),
- une alimentation en énergie (400) destinée à alimenter les systèmes d'enroulement de stator (111, 121) en énergie électrique,
- un agencement de rotors (200) doté au moins d'un premier et d'un deuxième rotor partiel (210, 220), et
- un arbre commun (300) destiné à transmettre au moyen de propulsion (1) une puissance d'entraînement fournie par chacun des rotors partiels (210, 220),
dans lequel
- le premier rotor partiel (210) est associé au premier système d'enroulement de stator (111) et le deuxième rotor partiel (220) est associé au deuxième système d'enroulement de stator (121),
- chacun des rotors partiels (210, 220) peut tourner par rapport au système d'enroulement de stator (111, 121) qui lui est associé et par rapport à l'autre rotor partiel (220, 210) respectivement,
- des rotors partiels (210, 220) et des systèmes d'enroulement de stator (111, 121) associés les uns aux autres forment un système d'entraînement partiel (T1, T2) respectif et sont réalisés et disposés les uns par rapport aux autres de telle sorte qu'ils peuvent interagir de manière électromagnétique entre eux,
et dans lequel
- chacun des rotors partiels (210, 220) est relié à l'arbre (300) à l'aide d'une roue libre (510, 520) respective de telle sorte que le rotor partiel (210, 220) respectif ne peut transmettre un couple à l'arbre (300) que dans un sens de rotation de travail de l'arbre (300) et peut être découplé mécaniquement de l'arbre (300), de manière à ce que l'arbre (300) tourne toujours dans le même sens de rotation de travail et aucun couple ne puisse être transmis de l'arbre (300) aux rotors partiels (210, 220),
et présentant en outre
- une commande d'entraînement (600),
**caractérisé en ce que** la commande d'entraînement (600)
- surveille la machine électrique (10) et ses systèmes d'entraînement partiels (T1, T2) quant à la présence d'un cas de panne, et
les systèmes d'entraînement partiels (T1, T2) présentant respectivement une source de courant (411, 421) qui alimente le système d'enroulement de stator (111, 121) du système d'entraînement partiel (T1, T2) respectif en courant électrique, dans lequel, dans le cas où un cas de panne est constaté dans l'un des systèmes d'entraînement partiels (T1, T2), le système d'enroulement de stator (111, 121) du système d'entraînement partiel (T1, T2) dans lequel une panne a été détectée est séparé galvaniquement de la source de courant (411, 421) de ce système d'entraînement partiel (T1, T2),
les systèmes d'entraînement partiels (T1, T2) présentant respectivement un convertisseur (412, 422) commandé par la commande d'entraînement (600) et qui est connecté électriquement respectivement entre la source de courant (411, 421) et le système d'enroulement de stator (111, 121) du système d'entraînement partiel (T1, T2), dans lequel, en cas de panne dans le système d'entraînement partiel (T1, T2) dans lequel une panne a été détectée, une température excessive ou une panne d'isolation ayant été constatée ou une panne de la source de courant (411, 421) associée ayant été détectée dans le système d'enroulement de stator (111, 112) concerné, une première connexion électrique entre la source de courant (411, 421) et le convertisseur (412, 422) de ce système d'entraînement partiel (T1, T2) ou une deuxième connexion électrique entre le convertisseur (412, 422) et le système d'enroulement de stator (111, 121) du système d'entraînement partiel (T1, T2) défectueux est séparée, et en fonction du composant des systèmes d'entraînement partiels (T1, T2) auquel la panne apparaît dans le système d'entraînement partiel (T1, T2), la première et/ou la deuxième connexion électrique dans ce système d'entraînement partiel (T1, T2) est séparée.
